# FASCICULE DE BREVET EUROPEEN

(11) **EP 2 707 204 B1**
(45) Date de publication et mention de la délivrance du brevet: **30.03.2016**
(21) Numéro de dépôt: 12731023.3
(22) Date de dépôt: 07.05.2012
(51) Int. Cl.: B29D 30/60, B29D 30/62, B29C 47/08, B29C 47/02, B29K 21/00, B29L 30/00

(54) **OUTIL DE POSE D'UNE BANDELETTE POUR LA REALISATION D'UNE EBAUCHE DE PNEUMATIQUE ET PROCÉDÉ DE RÉALISATION D'UNE ÉBAUCHE DE PNEUMATIQUE**
WERKZEUG ZUM POSITIONIEREN EINES BANDES ZUR HERSTELLUNG EINES REIFENROHLINGS UND VERFAHREN ZUR REALISATION EINES REIFENROHLINGS
TOOL FOR POSITIONING A STRIP FOR PRODUCING A TIRE BLANK AND METHOD FOR PERFORMING A TIRE BLANK

(30) Priorité: 10.05.2011 FR 1154011
(43) Date de publication de la demande: 19.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CHEVAUX, Nicolas, F-63040 Clermont-Ferrand Cedex 9 (FR)
(74) Mandataire: Noel, Luminita
(86) Numéro de dépôt international: PCT/FR2012/051012
(87) Numéro de publication internationale: WO 2012/153057

(56) Documents cités:
- EP-A1- 0 264 600
- EP-A1- 0 410 852
- EP-A1- 1 815 971
- EP-A2- 1 279 486
- WO-A1-02/081180
- US-A1- 2001 042 586

## Description

L'invention concerne la réalisation des ébauches crues de pneumatiques par l'enroulement de bandelettes sur un organe à symétrie de révolution.

Le document EP-0 264 600 divulgue un dispositif de réalisation d'une ébauche crue de pneumatique qui comprend un tambour rotatif et un outil présentant un bras apte à produire par extrusion une bandelette et à l'enrouler sur le tambour. Le bras est articulé sur son support autour d'un axe parallèle à l'axe de rotation du tambour. De la sorte, le bras peut adapter sa position suivant la direction radiale à l'axe du tambour pour s'en éloigner ou s'en rapprocher en raison d'irrégularités de forme du tambour ou de l'enroulement déjà constitué et aussi pour suivre l'augmentation du diamètre de l'ébauche causé par l'accumulation des couches de bandelettes déjà posées.

De plus, le bras est mobile à rotation par rapport au support autour d'un axe parallèle à la direction longitudinale du bras de façon à pouvoir adapter l'orientation de la bandelette à sa position sur le pneumatique, par exemple sur les flancs de l'ébauche ou encore pour la superposer en tout ou partie sur une ou plusieurs couches de bandelettes déjà posées.

Le bras est par ailleurs monté coulissant pour pouvoir parcourir toute la largeur de l'ébauche.

Lors de l'enroulement de la bandelette, le bras exerce sur celle-ci un effort d'application pour la faire adhérer aux couches de bandelettes déjà enroulées. Mais le poids du bras, qui porte les moyens d'extrusion voire des moyens de motorisation, engendre un effort supplémentaire sur la bandelette. Cet effort est peu préjudiciable lorsque la section de la bandelette a sa plus grande dimension parallèle à l'axe de rotation du tambour. Il le devient en revanche lorsque la bandelette est posée en position inclinée par rapport à cet axe.

En effet, l'effort d'application et l'effet de la gravité, dans ce cas, ne sont pas parallèles et leur résultante présente donc une composante parallèle à l'axe de rotation du tambour. Cela peut déformer ou altérer la bandelette lors de sa mise en place.

De plus, la précision habituellement requise pour le positionnement de la bandelette sur l'ébauche est de l'ordre du dixième de millimètre.

La diminution des temps de cycle pour fabriquer une telle ébauche conduit à accélérer la vitesse de rotation de la surface de réception ainsi que la vitesse d'alimentation de la bandelette. La surface de réception sur laquelle est constituée l'ébauche est une surface de révolution qui peut avoir une forme généralement cylindrique ou toroïdale.

Pour adapter la position de la bandelette, on souhaite donc pouvoir faire pivoter le bras autour du centre de la bandelette avec une accélération angulaire élevée.

Or la masse embarquée par le bras étant elle-même importante, le moment d'inertie du bras autour de cet axe peut atteindre des valeurs non négligeables.

Compte tenu des valeurs d'accélération souhaitées, le couple résistant qui apparaît lors de la rotation du bras peut affecter grandement les efforts mécaniques sur les axes.

Or, les technologies permettant de transmettre un tel couple présentent deux inconvénients notables. Elles engendrent un encombrement élevé et une augmentation substantielle de la masse générale du dispositif. Et si l'on veut obtenir des jeux de montage suffisamment réduits pour qu'ils soient compatibles avec l'installation, on se heurte à un surcoût important.

Un but de l'invention est de faciliter la réalisation des ébauches de pneumatiques par enroulement d'une bandelette sur un organe à symétrie de révolution, notamment à l'égard d'au moins l'une de ces deux problématiques.

A cet effet, on prévoit selon l'invention un outil de pose d'une bandelette pour la réalisation d'une ébauche de pneumatique, qui comprend :
- un support, et
- un bras portant un organe d'extrusion de la bandelette et un rouleau d'application de la bandelette,
le bras étant articulé par rapport au support autour d'un premier axe parallèle à un axe géométrique du rouleau et d'un deuxième axe tangent à une circonférence du rouleau, au moins l'un des premier et deuxième axes passant par un centre de gravité du bras.

Avantageusement, le premier axe passe par le centre de gravité.

Ainsi on s'affranchit de l'effet de la gravité du bras sur la bandelette lors de son enroulement sur la surface de réception. L'effort d'application exercé par le bras sur la bandelette est donc uniquement celui obtenu par les moyens spécifiquement prévus à cet effet et la résultante parasite précitée disparaît. On évite donc de générer sur la bandelette des déformations inutiles susceptibles de l'altérer.

Il devient également plus facile de modifier à tout moment cet effort d'application et de l'adapter à la vitesse de défilement de la bandelette ou à l'état rhéologique du matériau qui la constitue.

De plus, il est particulièrement avantageux de pouvoir adapter la pression de rouletage en fonction de la vitesse de défilement car le compromis temps-pression d'application n'est plus le même lorsque la vitesse change. En effet, le temps de mise en joint de la bandelette est beaucoup plus court à haute vitesse qu'à basse vitesse. Il est donc nécessaire d'augmenter la pression d'application à haute vitesse. Or, dans ce cas, compte tenu des imperfections géométriques du support ou de l'enroulement déjà effectué, l'outil subit des excitations de plus en plus importantes à mesure qu'augmente la vitesse de pose. Cela fait osciller la valeur de la pression d'application. Il est donc intéressant de pouvoir augmenter cette dernière afin de rigidifier le bras et de le rendre moins sensible aux excitations dues au passage sur les imperfections de la surface de réception. A l'inverse, la pression d'application mise en oeuvre à haute vitesse ne peut pas être utilisée à basse vitesse faute de quoi le produit subirait une détérioration. Il est donc avantageux là aussi de pouvoir adapter la pression.

Avantageusement, le deuxième axe passe par le centre de gravité du bras.

Cette disposition permet de réduire le moment d'inertie du bras par rapport à cet axe. Le couple résistant du bras lors de sa manoeuvre se trouve donc réduit en conséquence. On peut alors diminuer l'encombrement et la masse des moyens destinés à la fournir. On facilite aussi l'obtention des niveaux de jeu souhaités. De plus, cette position du centre de gravité supprime les efforts radiaux qui étaient générés par la force centripète. Les charges auxquelles sont soumis les moyens de guidage en rotation autour de cet axe se trouvent donc diminuées. On peut donc aussi de ce fait alléger ces derniers en réduisant leur taille et en augmentant leur précision.

De préférence, les premier et deuxième axes passent par le centre de gravité du bras.

Ainsi, en combinant ces deux caractéristiques, on combine leurs avantages.

L'outil selon l'invention pourra présenter en outre au moins l'une quelconque des caractéristiques suivantes :
- l'outil comporte une chaise,
- le bras est articulé à la chaise autour du premier axe,
- la chaise est articulée au support autour du deuxième axe,
- le bras est monté coulissant par rapport au support suivant au moins une des directions parmi une direction parallèle à un axe géométrique du rouleau et deux directions perpendiculaires à cette dernière et perpendiculaires entre elles, et de préférence suivant chacune de ces directions,
- le bras est articulé au berceau autour des premier et deuxième axes,
- le berceau est monté coulissant par rapport au support suivant la ou les directions,
- le support porte le berceau, et
- le berceau porte la chaise.

On prévoit également selon l'invention un dispositif de réalisation d'une ébauche crue de pneumatique, qui comporte un organe de réception à symétrie de révolution et au moins un outil selon l'invention, apte à poser une bandelette sur l'organe de réception.

Avantageusement, le dispositif comporte au moins deux outils aptes à poser des bandelettes sur le même organe de réception.

En effet, augmenter le nombre d'outils associés à une même surface de réception permet d'accélérer la cadence de production des ébauches.

On prévoit également selon l'invention un procédé de réalisation d'une ébauche de pneumatique, dans lequel au moins un bras produit une bandelette par extrusion et un rouleau du bras la dépose sur un organe de réception à symétrie de révolution, le bras pivotant par rapport à un support du bras autour d'un premier axe parallèle à un axe géométrique du rouleau et d'un deuxième axe tangent à une circonférence du rouleau, au moins l'un des premier et deuxième axes passant par un centre de gravité du bras.

D'autres caractéristiques et avantages de l'invention apparaîtront encore dans la description suivante d'un mode de réalisation donné à titre d'exemple non limitatif, en référence aux dessins annexés sur lesquels :
- la figure 1 est une vue partielle en section axiale d'une ébauche de pneumatique réalisée au moyen de l'invention ;
- la figure 2 est une vue en section transversale d'une bandelette fabriquée lors de la mise en oeuvre de l'invention ;
- la figure 3 est une vue d'ensemble d'une installation selon un mode de réalisation de l'invention ;
- la figure 4 est une vue en perspective du détail D de la figure 3 ;
- les figures 5 et 6 sont deux vues d'extrémité du bras de la figure 4 dans deux positions respectives par rapport au support ;
- la figure 7 est une vue de côté du bras et de la surface de réception de la figure 4 ;
- la figure 8 illustre les mouvements du bras au contact de l'ébauche lors de la mise en oeuvre de l'invention ; et
- les figures 9 et 10 sont des vues de la surface de réception de l'installation de la figure 3.

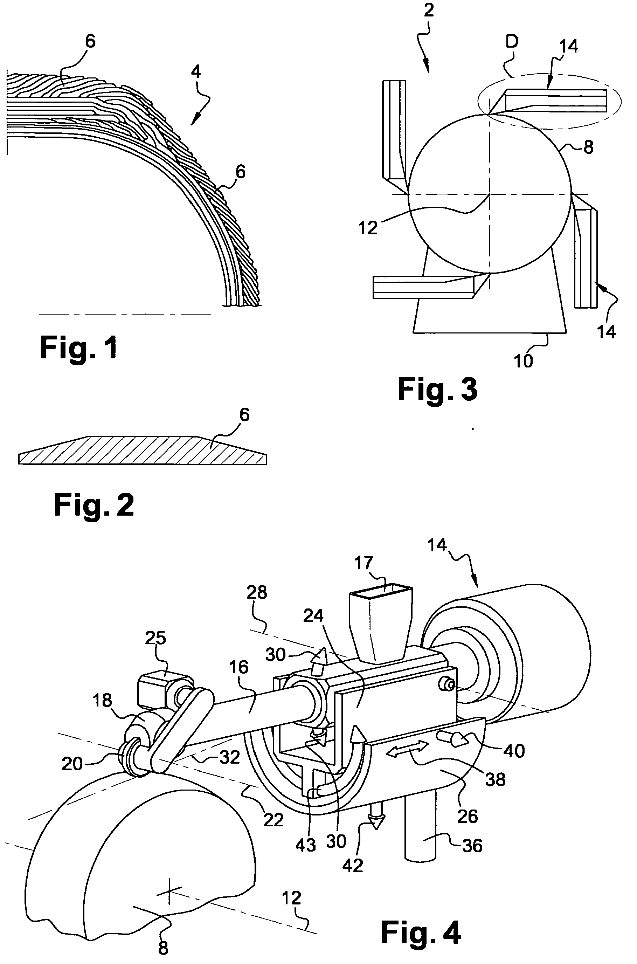

On a illustré aux figures 3 à 10 une installation 2 selon l'invention pour la réalisation d'une ébauche crue de pneumatique 4 telle que celle illustrée à la figure 1, cette réalisation mettant en oeuvre l'extrusion et l'enroulement d'une bandelette 6 dont la section dans un plan perpendiculaire à sa direction longitudinale a été illustrée à la figure 2.

L'installation 2 comprend un organe de réception 8 porté par un support 10 de l'installation en étant monté rotatif par rapport à ce dernier. L'organe 8 a une forme générale annulaire cylindrique ou toroïdale à symétrie de révolution autour d'un axe horizontal 12 qui correspond à son axe de rotation. Sa face externe circonférentielle forme une surface de réception pour la bandelette. Il forme par exemple un tambour.

L'installation 2 comprend au moins un outil 14 de production et de pose de la bandelette 6. En l'espèce, l'installation comprend plusieurs outils 14 qui sont ici au nombre de quatre. Les outils sont par exemple disposés comme illustré à la figure 3 en étant régulièrement répartis autour de l'axe 12 et de sorte qu'une extrémité distale de chaque outil vient en contact avec la face circonférentielle de l'organe de réception. Dans la suite, nous allons décrire l'outil 14 qui vient en contact avec la surface de réception de l'organe 8 et qui est posé à l'azimut de 12 heures.

L'outil 14 comprend un bras 16 présentant une forme générale rectiligne allongée, la direction longitudinale du bras étant parallèle à la direction tangente à la direction circonférentielle de la surface de réception, cette direction tangente étant perpendiculaire à l'axe 12. Le bras 16 porte dans une portion médiane du bras un organe 17 pour l'introduction des constituants de la gomme. Il comprend à son extrémité distale un organe 18 d'extrusion de la bandelette de gomme 6, formé en l'espèce, par un nez à rouleau 20. Le rouleau est monté rotatif par rapport au corps du bras autour d'un axe 22 confondu avec l'axe géométrique principal du rouleau et parallèle à l'axe 12 de l'organe 8. Le bras porte des moyens de motorisation 25 aptes à faire tourner le rouleau autour de son axe.

D'une façon connue en elle-même et qui ne sera pas détaillée ici, la matière introduite à travers l'organe 17 parcourt l'intérieur du bras et est extrudée par le nez à rouleau sous la forme de la bandelette 6. La bandelette est déposée sur la face circonférentielle du rouleau 20 puis transférée sur celle de la surface de réception de l'organe 8 ou bien sur les couches de bandelettes déjà enroulées sur ce dernier. On pourra se référer par exemple au document EP- 0 264 600 précité pour plus de détails à ce sujet.

L'outil 14 comprend un berceau interne, formant ici une chaise 24, portant le bras 16, ainsi qu'un berceau externe 26 portant la chaise 24 et porté lui-même par le support 10.

La chaise 24 a une forme générale profilée à section en « U », ouverte vers le haut. On forme ainsi une cavité dans laquelle s'étend le bras 16 qui émerge aux deux extrémités longitudinales de la cavité. Le bras 16 est articulé à la chaise 24 autour d'un axe horizontal 28 parallèle à l'axe 22 et appelé ici axe de compliance. L'articulation est par exemple réalisée au moyen d'un arbre traversant le bras ainsi que les parois de la chaise de part en part. Cette mobilité en rotation permet de déplacer le rouleau 20 pour le rapprocher ou l'éloigner de l'axe 12 comme illustré par les flèches 30.

Le berceau externe 26 a une forme générale en demi-cylindre à section en arc de cercle, ouverte vers le haut. Il forme une cavité dans laquelle la chaise 24 est reçue.

La chaise 24 est montée mobile à rotation par rapport au berceau externe 26 autour d'un axe 32 appelé en l'espèce axe alpha. Cet axe est perpendiculaire aux axes 12 et 22, tangent aux faces circonférentielles du rouleau 20 et de l'organe 8 et passe par le point de contact instantané entre ceux-ci. En l'espèce, la rotation de la chaise dans le berceau externe est guidée et entraînée notamment au moyen d'une crémaillère en arc de cercle portée par le berceau et d'un moteur muni d'un pignon engrenant avec la crémaillère et porté par la chaise.

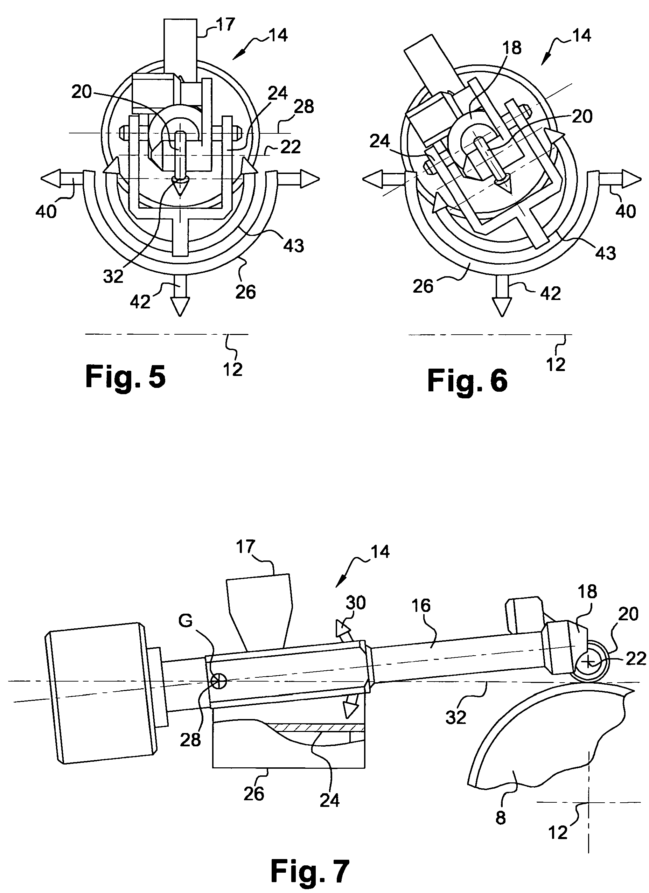

Grâce à cette rotation autour de l'axe alpha 32, la chaise et le bras peuvent occuper une position illustrée à la figure 5, dans laquelle l'axe de compliance 28 et l'axe 22 du rouleau sont parallèles à l'axe de rotation 12 de la surface de réception, ou une position illustrée par exemple à la figure 6 dans laquelle ces deux axes sont inclinés par rapport à l'axe 12.

Le bras est configuré de sorte que l'axe de compliance 28 et l'axe alpha 32 passent par le centre de gravité G du bras qui forme ainsi leur point d'intersection. C'est du bras défini comme formant l'ensemble reçu dans la chaise 24 et articulé à cette dernière autour de l'axe 28 qu'il s'agit ici. Cet ensemble comprend donc notamment les organes 17 et 18 et les moyens 25.

Le berceau externe 26 est relié au support 10 par l'intermédiaire de moyens 36 rendant le berceau mobile à coulissement par rapport au support suivant les trois directions de coulissement suivantes :
- la direction 38 parallèle à la direction longitudinale du bras ;
- la direction horizontale 40 parallèle à l'axe 22 et
- la direction 42 perpendiculaire aux deux dernières.

Dans le cas de l'outil supérieur 14 qui est ici décrit en détail, les deux premières directions sont horizontales tandis que la troisième est verticale.

Les moyens 36 font partie en l'espèce d'un robot apte à faire coulisser le bras 16 suivant les trois directions 38, 40 et 42 par rapport à l'organe 8 et à commander le pivotement autour de l'axe alpha 32.

L'outil 14 comprend en outre un dispositif générateur d'effort apte à appliquer le rouleau 20 sur l'organe 8 avec une pression radiale à l'axe 12 et de valeur prédéterminée et réglable. Ce dispositif est par exemple un vérin pneumatique à membrane.

Les autres outils 14 de l'installation de la figure 3 occupent autour de l'organe 8 des positions analogues à celles de l'outil 14 qui vient d'être décrit et qui sont l'image de la sienne par une rotation d'un quart de tour autour de l'axe 12. En particulier, deux des bras 16 sont horizontaux et les deux autres sont verticaux. Ces outils peuvent être décalés axialement pour éviter les interférences entre les différents empilages de bandelette.

La réalisation de l'ébauche 4 au moyen du procédé de l'invention a lieu en l'espèce comme suit.

L'organe 8 tourne autour de son axe 12. Dans chaque outil 14, les matériaux destinés à former la gomme sont introduits par l'organe 17 dans le bras puis extrudés au niveau du nez 18 sous la forme d'une bandelette 6 qui s'applique contre le rouleau 20 en rotation, afin d'être déposée et enroulée sur la face circonférentielle de l'organe 8. Certaines couches de bandelettes sont déposées directement sur la surface de réception tandis que d'autres sont déposées en partie ou intégralement sur des couches enroulées précédemment comme le montre la coupe de l'ébauche illustrée à la figure 1. La bandelette sert à constituer les parties de l'ébauche qui formeront la bande de roulement du pneumatique ainsi que ses flancs.

Pendant l'enroulement, l'outil 14 exerce une pression radiale d'intensité prédéterminée sur la bandelette au moyen du rouleau 20. Grâce au fait que l'axe de compliance 28 passe par le centre de gravité G, cet effort n'est pas parasité par un effort lié à la pesanteur du bras. La maîtrise de l'effort d'application se fait sans qu'il soit nécessaire de diminuer la masse embarquée dans le bras 16.

L'axe de compliance 28 permet au bras de suivre d'éventuels défauts de circularité de la surface de réception et de l'ébauche en lui permettant d'absorber ces irrégularités. Les principales sources d'irrégularités sont les suivantes :
- le faux rond de ceinture ou défaut de circularité de la surface de réception, qui présente une amplitude très faible, de l'ordre d'un centième de millimètre, et qui est réparti sur un tour ;
- le passage sur le départ de la première spire. Il présente une amplitude élevée mais est ponctuel et disparaît progressivement ; et
- la géométrie non circulaire de l'organe formant la surface de réception.

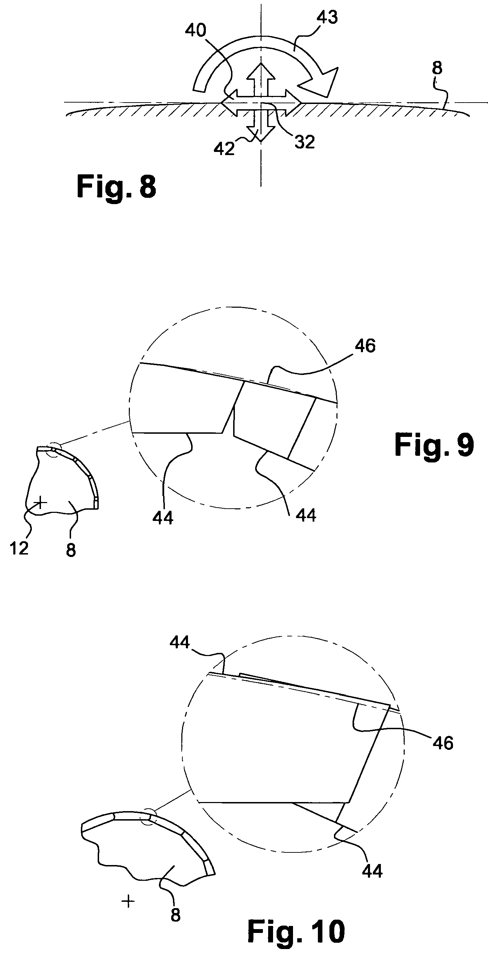

L'amplitude de ce dernier défaut est très faible, de l'ordre d'un dixième de millimètre mais sa fréquence d'apparition est élevée, par exemple dix à quinze fois par tour. En effet, la surface de réception peut comprendre plusieurs secteurs se succédant en direction circonférentielle et montés mobiles pour adapter le diamètre de cette surface à celui de l'ébauche à réaliser. La présence de ces secteurs engendre des défauts de régularités du cylindre formant la face circonférentielle de l'organe 8. De tels secteurs 44 ont été illustrés aux figures 9 et 10. Sur la figure 9, la jonction entre les secteurs se succédant en direction circonférentielle engendre un effet de sous-épaisseur au passage d'un secteur à l'autre. A l'inverse, sur la figure 10, le passage d'un secteur à l'autre engendre un effet de surépaisseur au niveau des bords des secteurs. Sur ces deux figures, le détail montrant une partie de la surface de réception à plus grande échelle illustre la forme des secteurs et celle du profil cylindrique circulaire théorique 46.

Au cours de l'application de la bandelette, le robot 36 commande le coulissement du bras suivant les directions 38, 40 et 42 ainsi que sa rotation autour de l'axe alpha 32 en fonction de l'orientation souhaitée de la bandelette à déposer sur l'ébauche et de la zone de pose de la bandelette.

On a notamment illustré à la figure 8 le coulissement du bras suivant les directions 40 et 42, et avec la flèche 43, son pivotement autour de l'axe 32. Puisque l'axe alpha 32 passe par le centre de gravité G, le moment d'inertie du bras autour de cet axe est modéré et les efforts nécessaires pour déplacer le bras autour de cet axe peuvent rester d'intensité modeste.

Dans le présent exemple, et comme illustré à la figure 2, la section de la bandelette a une forme lenticulaire en partie supérieure formée par trois facettes et dirigée du côté opposé à l'organe 8. Sa face inférieure est plane. Elle présente par exemple une longueur de 16 mm et une hauteur de 1,7 mm pour une surface de section de 22,25 m², ces valeurs n'étant pas limitatives. D'autres formes de section sont possibles, par exemple une section rectangulaire, et il suffit d'adapter l'outillage du nez pour la changer.

Lors de la suite de la fabrication, l'ébauche une fois achevée subit notamment une étape de cuisson dans une presse pour la vulcanisation de la gomme et l'obtention du pneumatique.

Le pneumatique sera par exemple un pneumatique de roue de véhicule léger, de véhicule de tourisme, de véhicule de type poids lourd, de véhicule utilitaire ou d'engin de génie civil.

L'invention permet aussi de positionner les outils 14 par rapport à l'organe 8 en tenant compte de plusieurs contraintes :
- l'encombrement de l'ensemble de l'installation 2 ;
- l'effet de la gravité sur les outils, contrainte qui est justement réduite à néant grâce à l'invention ;
- l'alimentation en matière, et
- l'ergonomie et la sécurité de la machine.

Bien entendu, on pourra apporter à l'invention de nombreuses modifications sans sortir du cadre de celle-ci.

## Revendications

1. Outil (14) de pose d'une bandelette (6) pour la réalisation d'une ébauche (4) de pneumatique, qui comprend :
- un support (10), et
- un bras (16) portant un organe (18) d'extrusion de la bandelette et un rouleau (20) d'application de la bandelette,
le bras étant articulé par rapport au support autour d'un premier axe (28) parallèle à un axe géométrique (22) du rouleau,
**caractérisé en ce que** le bras est articulé par rapport au support autour d'un deuxième axe (32) tangent à une circonférence du rouleau, au moins l'un des premier et deuxième axes passant par un centre de gravité (G) du bras.

2. Outil selon la revendication précédente dans lequel le premier axe (28) passe par le centre de gravité (G) du bras.

3. Outil selon au moins l'une quelconque des revendications précédentes dans lequel le deuxième axe (32) passe par le centre de gravité (G) du bras.

4. Outil selon au moins l'une quelconque des revendications précédentes dans lequel les premier et deuxième axes (28, 32) passent par le centre de gravité (G) du bras.

5. Outil selon au moins l'une quelconque des revendications précédentes qui comporte une chaise (24), le bras (16) étant articulé à la chaise (24) autour du premier axe (28), la chaise étant articulée au support (10) autour du deuxième axe (32).

6. Outil selon au moins l'une quelconque des revendications précédentes dans lequel le bras (16) est monté coulissant par rapport au support suivant au moins une des directions parmi :
- une direction (40) parallèle à un axe géométrique du rouleau (20) et
- deux directions (38, 42) perpendiculaires à cette dernière et perpendiculaires entre elles, et de préférence suivant chacune de ces directions.

7. Outil selon la revendication précédente qui comporte un berceau (26), le bras étant articulé au berceau (26) autour des premier (28) et deuxième (32) axes, le berceau (26) étant monté coulissant par rapport au support suivant la ou les directions.

8. Outil selon les revendications 5 et 7, dans lequel le support (10) porte le berceau (26), et le berceau (26) porte la chaise (24).

9. Dispositif (2) de réalisation d'une ébauche crue de pneumatique, **caractérisé en ce qu'**il comporte un organe de réception (8) présentant une surface à symétrie de révolution et au moins un outil (14) selon au moins l'une quelconque des revendications précédentes et apte à poser une bandelette (6) sur l'organe de réception.

10. Dispositif selon la revendication précédente qui comporte au moins deux outils (14) aptes à poser des bandelettes sur le même organe de réception (8).

11. Procédé de réalisation d'une ébauche (4) de pneumatique, **caractérisé en ce qu'**au moins un bras (16) produit une bandelette (6) par extrusion et un rouleau (20) du bras la dépose sur un organe de réception présentant une surface à symétrie de révolution (8), le bras pivotant par rapport à un support du bras (16) autour d'un premier axe (28) parallèle à un axe géométrique (22) du rouleau (20) et d'un deuxième axe (32) tangent à une circonférence du rouleau (20), au moins l'un des premier et deuxième axes passant par un centre de gravité (G) du bras (16).

## Patentansprüche

1. Werkzeug (14) zum Verlegen eines Bands (6) zur Herstellung eines Luftreifen-Rohlings (4), das enthält:
- einen Träger (10), und
- einen Arm (16), der ein Organ (18) zum Strangpressen des Bands und eine Rolle (20) zum Anbringen des Bands trägt,
wobei der Arm bezüglich des Trägers um eine erste Achse (28) parallel zu einer geometrischen Achse (22) der Rolle angelenkt ist,
**dadurch gekennzeichnet, dass** der Arm bezüglich des Trägers um eine zweite Achse (32) angelenkt ist, die einen Umfang der Rolle tangiert, wobei mindestens eine der ersten und zweiten Achsen durch einen Schwerpunkt (G) des Arms geht.

2. Werkzeug nach dem vorhergehenden Anspruch, wobei die erste Achse (28) durch den Schwerpunkt (G) des Arms geht.

3. Werkzeug nach mindestens einem der vorhergehenden Ansprüche, wobei die zweite Achse (32) durch den Schwerpunkt (G) des Arms geht.

4. Werkzeug nach mindestens einem der vorhergehenden Ansprüche, wobei die erste und die zweite Achse (28, 32) durch den Schwerpunkt (G) des Arms gehen.

5. Werkzeug nach mindestens einem der vorhergehenden Ansprüche, das ein Gestell (24) aufweist, wobei der Arm (16) am Gestell (24) um die erste Achse (28) angelenkt ist, wobei das Gestell am Träger (10) um die zweite Achse (32) angelenkt ist.

6. Werkzeug nach mindestens einem der vorhergehenden Ansprüche, wobei der Arm (16) bezüglich des Trägers in mindestens einer der folgenden Richtung gleitend montiert ist:
- einer Richtung (40) parallel zu einer geometrischen Achse der Rolle (20) und
- zwei Richtungen (38, 42) lotrecht zu dieser letzteren und lotrecht zueinander, und vorzugsweise gemäß jeder dieser Richtungen.

7. Werkzeug nach dem vorhergehenden Anspruch, das eine Lagerung (26) aufweist, wobei der Arm an der Lagerung (26) um erste (28) und zweite (32) Achsen angelenkt ist, wobei die Lagerung (26) bezüglich des Trägers gemäß der oder den Richtungen gleitend montiert ist.

8. Werkzeug nach den Ansprüchen 5 und 7, wobei der Träger (10) die Lagerung (26) trägt, und die Lagerung (26) das Gestell (24) trägt.

9. Vorrichtung (2) zur Herstellung eines Luftreifen-Rohlings, **dadurch gekennzeichnet, dass** sie ein Aufnahmeorgan (8), das eine drehsymmetrische Fläche hat, und mindestens ein Werkzeug (14) nach mindestens einem der vorhergehenden Ansprüche aufweist, das ein Band (6) auf dem Aufnahmeorgan verlegen kann.

10. Vorrichtung nach dem vorhergehenden Anspruch, die mindestens zwei Werkzeuge (14) aufweist, die Bänder auf dem gleichen Aufnahmeorgan (8) verlegen können.

11. Verfahren zur Herstellung eines Luftreifen-Rohlings (4), **dadurch gekennzeichnet, dass** mindestens ein Arm (16) ein Band (6) durch Strangpressen erzeugt und eine Rolle (20) des Arms es auf einem Aufnahmeorgan verlegt, das eine drehsymmetrische Fläche (8) hat, wobei der Arm bezüglich eines Trägers des Arms (16) um eine erste Achse (28) parallel zu einer geometrischen Achse (22) der Rolle (20) und um eine zweite Achse (32) schwenkt, die einen Umfang der Rolle (20) tangiert, wobei mindestens eine der ersten und zweiten Achsen durch einen Schwerpunkt (G) des Arms (16) geht.

## Claims

1. Tool (14) for laying a strip (6) for producing a green tyre blank (4), comprising:
- a support (10), and
- an arm (16) bearing a strip extrusion member (18) and a strip applicator roller (20),
the arm being articulated with respect to the support about a first axis (28) parallel to a geometric axis (22) of the roller,
**characterized in that** the arm is articulated with respect to the support about a second axis (32) tangential to a circumference of the roller, at least one of the first and second axes passing through a centre of gravity (G) of the arm.

2. Tool according to the preceding claim, in which the first axis (28) passes through the centre of gravity (G) of the arm.

3. Tool according to at least either one of the preceding claims, in which the second axis (32) passes through the centre of gravity (G) of the arm.

4. Tool according to at least any one of the preceding claims, in which the first and second axes (28, 32) pass through the centre of gravity (G) of the arm.

5. Tool according to at least any one of the preceding claims which comprises a bracket (24), the arm (16) being articulated to the bracket (24) about the first axis (28), the bracket being articulated to the support (10) about the second axis (32).

6. Tool according to at least any one of the preceding claims in which the arm (16) is mounted such that it can slide with respect to the support in at least one of the following directions:
- a direction (40) parallel to a geometric axis of the roller (20), and
- two directions (38, 42) perpendicular to the latter and perpendicular to one another, and preferably in each of these directions.

7. Tool according to the preceding claim which comprises a cradle (26), the arm being articulated to the cradle (26) about the first (28) and second (32) axes, the cradle (26) being mounted such that it can slide with respect to the support in the direction or directions.

8. Tool according to Claims 5 and 7, in which the support (10) bears the cradle (26) and the cradle (26) bears the bracket (24).

9. Device (2) for creating a green tyre blank, **characterized in that** it comprises a receiver (8) having a surface exhibiting symmetry of revolution and at least one tool (14) according to at least any one of the preceding claims and able to apply a strip (6) to the receiver.

10. Device according to the preceding claim which comprises at least two tools (14) able to apply strips to the same receiver (8).

11. Method for creating a green tyre blank (4), **characterized in that** at least one arm (16) produces a strip (6) by extrusion and a roller (20) of the arm applies that strip to a receiver having a surface exhibiting symmetry of revolution (8), the arm pivoting with respect to a support of the arm (16) about a first axis (28) parallel to a geometric axis (22) of the roller (20) and about a second axis (32) tangential to a circumference of the roller (20), at least one of the first and second axes passing through a centre of gravity (G) of the arm (16).
